# EUROPEAN PATENT APPLICATION

(11) **EP 2 400 317 A1**
(43) Date of publication of application: **28.12.2011**
(21) Application number: 10167068.5
(22) Date of filing: 23.06.2010
(51) Int. Cl.: G01T 1/02, G01T 1/17

(54) **Method and system for measuring radiation doses in radiotherapy treatments**

(71) Applicant: Adam SA, 1203 Geneva (CH)
(72) Inventor: Haerkoenen, Jaakko, 1214, Vernier (CH); Luukka, Panja, 1214, Vernier (CH); Ungaro, Donatella, 01170, Gex (FR); Czellar, Sandor, 1220, Geneva (CH)
(74) Representative: Di Bernardo, Antonio

(57) **Abstract**

It is disclosed a method for measuring a radiation dose in a radiotherapy treatment. Radiation is detected by means of a detector (2) which outputs a current signal (s1) dependent on the detected radiation. Radiation dose is estimated by considering the current signal (s1) during at least one measuring time interval, starting of said at least one measuring time interval being obtained by comparing a threshold with the amplitude of a reference signal generated from the current signal.

It is also disclosed a system for measuring radiation provided to a patient during radiotherapy treatments.

## Description

### DESCRIPTION

### Field of the invention

The present invention relates to medical treatments and particularly to methods for measuring a radiation dose provided in radio therapy treatments, like Intra Operative Radiotherapy (IORT), wherein treated subjects are exposed to radiations.

The invention further relates to systems for implementing the above methods.

### Background of the invention

Radio therapy is a medical treatment which makes use of ionizing radiations to treat diseases like cancers and tumours in general.

Ionizing radiations (like electrons beams) are used to irradiate part of a body wherein tumour is located, so as to kill malignant cells.

In order to improve efficiency of these treatments, it is known to combine radio therapy with other medical techniques, like surgical methods.

This is the case of Intra Operative Radiotherapy (IORT) wherein the patient undergoes a surgical treatment to remove the tumour and wherein ionizing radiation is provided directly to the tumour or to the tumour bed during operation.

Ionizing radiations are usually generated by means of a linear accelerator (also called LINAC). A source of particles (e.g. an hot cathode, a cold cathode or a photocathode) generates particles to be accelerated, e.g. electrons, protons or ions in general. A high voltage source injects these particles in a vacuum chamber where electrically insulated cylindrical electrodes are placed. One or more microwave sources drive the cylindrical electrodes so that the particles are accelerated and grouped in packets.

Independently from the radiotherapy treatment and of the source of ionizing radiation, it is very important to control the radiation dose that is provided to the patient at each therapy session. One point of success of radiotherapy is, in fact, the correct dosage of ionizing radiations, which shall be enough for killing malignant cells, but not excessive in order not to debilitate the patient too much.

To this purpose measuring systems (also known as dosimeters) are known which allows for detecting and measuring the ionizing radiation given to the patient.

Most used dosimeters comprise a detector which generates an electrical signal dependent on the radiation that hits its detecting surface. The current signal from the detector is provided to a data acquisition system wherein it is integrated and digitally converted. By integrating the current signals provided by the detector, all the current contributions due to different radiation pulses are taken into account.

The applicant has found that these solutions have several drawbacks.

First of all they are not very accurate as the continuous integration of the current generated by the detector also takes into account bias currents due to many effects like damages made by ionizing radiation hitting the detector.

It is known that noise contribution can be removed from the measurement by an opportune calibration of the dosimeter; nevertheless, this calibration process is very time consuming and does not allow use of the radiotherapy equipment for a certain amount of time that could be otherwise dedicated to patient's treatment.

### Objects and summary of the invention

It is an object of the present invention to overcome the above drawbacks of radiation measuring systems and methods.

It is also an object of the present invention to present a method and a system for measuring radiation doses, which provide stable performance with respect of time.

It is also an object of the present invention to provide a method and a system for measuring radiation doses that is more reliable and needs less maintenance.

These and further objects of the present invention are achieved by a method and a system for measuring radiation doses incorporating the features of the annexed claims, which form integral part of the present description.

According to one aspect of the invention, the radiation is detected by means of a detector which outputs a current signal is dependent on the received radiation. Radiation dose is calculated by taking into account only contribution of the current signal received during given measuring time intervals that correspond to radiation pulses. In order to automatically synchronize measurement with radiation pulses, starting of these measuring time intervals is obtained by comparing a threshold with the amplitude of a reference signal generated from the current signal amplitude.

This solution allows eliminating the contribution of the current signals during time intervals wherein radiation pulses are not present and the current signal contribution is only due to bias currents.

In a preferred embodiment the reference signal is obtained by integrating the current signal from the dosimeter, so that it can at the same time provide a reference for deciding when to start measurement, and a data for calculating the radiation dose.

In a further embodiment, the reference signal is obtained by high pass filtering the signal obtained by integrating the current signal output by the detector. High pass filtering allows eliminating the contribution of low frequency noise and bias currents so as to better distinguish the current signal components depending on the radiation, so as to start measuring at the right time.

In a further embodiment, the method provides for integrating the current signal from the detector, and then high-pass filtering the integral signal so as to eliminate or at least attenuate frequency components below a first predetermined cut-off frequency. In this embodiment, only the contribution of the filtered signal is considered for estimating the radiation dose. In this way, the measurement does not include DC components, not even the one dependent on the bias current of the dosimeter, which do not depend on the radiation. Measurement precision is therefore improved.

In this embodiment, measuring time intervals are preferably ended when the amplitude of the filtered signal equals a predetermined value, in particular when it is zero. This allows a better measurement since it is possible to avoid that negative components of the high pass filtered signal have a negative impact on radiation measurement.

In another embodiment the duration of the time intervals is equal to a predetermined and fixed value, preferably equal or longer than the expected pulse radiation. This solution allows measuring the radiation dose with fewer components.

According to another aspect of the invention, measuring is accomplished by means of a measuring system adapted to implement the above methods, and in particular a measuring system comprising:
- at least one detector, preferably a silicon photodiode;
- a charge amplifier circuit adapted to process, and in particular to integrate, an electrical signal generated by the detector;
- an high-pass filter for eliminating the DC component of the integrator output signal;
- a comparator detecting when the amplitude of the filtered signal crosses a predetermined threshold;
- one switch operatively connected to said comparator so as to start measuring of radiation when said filtered signal crosses said threshold.

The invention is also directed to a radiotherapy method and to a relative equipment wherein radiation measuring is made according to the above methods and systems.

The invention is also directed to a medical treatment and to a medical equipments using the measurement method and systems according to the invention, so as to regulate the radiation dose that is given to a patient.

### Brief description of the drawings

Further features and advantages of the invention will be more apparent upon reading the detailed description of a preferred, non-exclusive embodiment of a method and a system for measuring radiation doses according to the invention, which is described as a nonlimiting example with the help of the annexed drawings, in which:
- FIG. 1 is a schematic of a measuring system according to a first embodiment of the invention;
- FIG. 2 is a schematic of a measuring system according to a second embodiment of the invention;
- FIG. 3 is a schematic of a measuring system according to a third embodiment of the invention;
- FIG. 4 shows some signals inside the measuring system of figure 3;
- FIG. 5 is an alternative schematic of a current integrator circuit of figure 1;
- FIG. 6 is an alternative schematic of a high-pass filter circuit of figure 2;
- FIG. 7 is a schematic of a measuring system according to a fourth embodiment of the invention;

These drawings illustrate different aspects and embodiments of the present invention and, where appropriate, like structures, components, materials and/or elements in different figures are indicated by similar reference numbers.

### Detailed description of a preferred embodiment

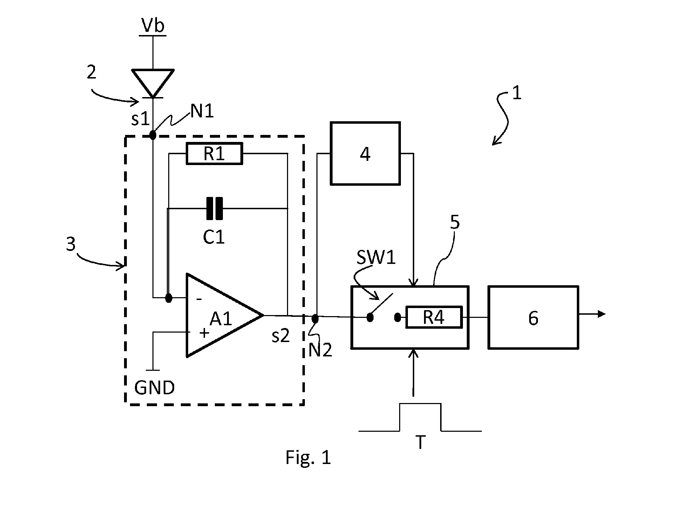

Figure 1 shows a measuring system 1 for measuring radiation doses according to a first embodiment of the invention.

Measuring system 1 is adapted to implement a method for measuring radiation doses provided in a radio therapy treatment, in particular IORT.

In the embodiment of fig. 1, measuring system 1 comprises a detector 2 and a readout circuit suitable for reading the output of detector 2 and measure the detected radiation. Detector 2 comprises a detecting surface which is exposed to the radiation to be detected, therefore during normal operation it is placed in a space region to be irradiated, e.g. in case of IORT treatment near the tumour.

Detector 2 generates an electric signal, in particular a current signal s1, which depends on the radiation that hits the detecting surface of the same.

In case of a radiation dose provided by repeated pulses, like in the case of a LINAC, signal s1 presents a sequence of pulses each having areas that, in the ideal case, are proportional to the radiation detected.

In one embodiment, detector 2 comprises a silicon photodiode biased in reverse mode, in particular a photodiode SLSD 71N2 made by Silonex Inc.

In other embodiments, detector 2 can be any device suitable for detecting the radiation used for any radiotherapy treatment, such as radiochromic films, Fricke dosimeters made of ferrous sulphate, ionization chambers, photodiodes made of compound semiconductor (GaAs, GaN, CdTe, SiC, etc...) or MOSFET detectors.

Back to figure 1, the anode of detector 2 is connected to a bias voltage source Vb so as to be reverse biased; the cathode is connected to the input terminal N1 of the charge amplifier circuit 3. Charge amplifier 3 allows compensating parasitic capacitaces due the cabling (which can be also several ten meters long) between the readout electronics and the detector 2.. Input terminal N1 is a virtual ground able to collect the signal from the detector 2.

In another embodiment, detector 2 is a not biased diode.

Charge amplifier circuit 3 comprises an operational amplifier A1, a resistor R1 and a capacitor C1. The inverting input terminal of the operational amplifier A1 is connected to the input terminal N1. Resistor R1 and capacitor C1 are connected in parallel between the output terminal and the input negative terminal of the amplifier A1. The positive input terminal of amplifier A1 is connected to a fixed voltage used as common ground. The output terminal N2 of circuit 3 is the output terminal of amplifier A1.

For each radiation pulse (e.g. a group of electrons packed by a microwave) detected by detector 2, charge amplifier 3 collects the charges output by detector 2 and outputs a signal s2 which is a voltage signal having maximum amplitude proportional to the charge of the radiation pulse, i.e. time integral of current signal s1.

In the embodiment of figure 1, signal s2 is used as a reference signal and its amplitude is compared by comparator 4 with a threshold which is determined empirically. This threshold is fixed in order to allow distinguishing (inside signal s2) a pulse from the noise, and in particular the DC noise.

Comparator 4 controls a switching module 5 which connects the output N2 of charge amplifier circuit 3 with the input terminal of a second integrator 6.

In detail, when s2 is greater than a predetermined threshold, switching module 5 closes and signal s2 is provided to the input of integrator 6.

In the embodiment of fig. 1, switching module 5 comprises a switch SW1 and a resistor R4 which acts as an amplification stage for integrator 6.

Opening and closing of switch SW1 therefore allow controlling the gain of the measuring system 1, which is zero when switch SW1 is open, i.e. outside the measuring time intervals.

A timing circuit, not shown in figure 1, opens switch SW1 after a predetermined measuring time interval T; to this purpose the timing circuit is connected to comparator 4. As an example, timing circuit can be a countdown circuit activated by comparator 4. Switching module 5 implements a temporal selection by allowing only a signal in specific time intervals to reach integrator 6.

The circuit 6 is an integrator, e.g. made with an operational amplifier with a capacitor connected between its inverting terminal and its output. The output signal of the circuit 6 is the result of an integration process and corresponds to the output signal of the entire system 1 representing the measured dose.

In one embodiment integrator circuit 6 comprises an integrator whose output is fed to a voltage to frequency converter followed by a digital counter.

In the preferred embodiment, integrator circuit 6 is reset at the beginning of each measurement, therefore a rest circuit (which can be manually or automatically operated) is provided for resetting integrator circuit 6.

Dimensioning of circuit 1 depends on the characteristics of the radiation to be detected. In particular, the measuring time interval T is selected in order to be greater than the radiation pulse length, but smaller than half, and preferably smaller than 20%, the period elapsing between two consecutive radiation pulses.

Resistor R1 and capacitor C1 are selected in order to have an integration time which is greater than the radiation pulse length and smaller than half, and preferably smaller than 20%, the period elapsing between two consecutive radiation pulses.

As several radiation pulses arrive shifted in time, only the contribution of signal s1 which is present in the measuring time intervals is taken into consideration and summed by integrator circuit 6.

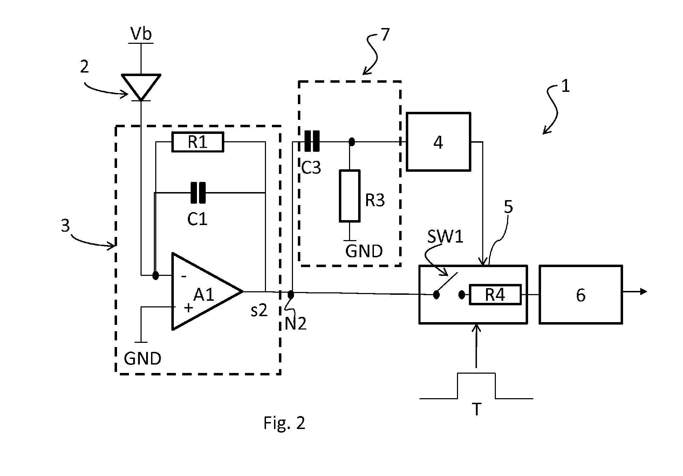

Figure 2 shows an alternative embodiment to the measuring system of figure 1. In this embodiment an high pass filter 7 is applied between the output of charge amplifier circuit 3 and the input of comparator 4.

High pass filter 7 comprises a resistor R3 and a capacitor C3. Capacitor C3 is connected on one side to the output terminal of charge amplifier circuit 3, and on the other side to a terminal of resistor R3, representing the output terminal of filter 7. The other terminal of R3 is connected to a fixed voltage, and in particular to the common ground GND. Filter 7 eliminates or at least attenuates the frequency components of a signal at its input terminal below a second cut-off frequency depending on the values of resistor R3 and capacitor C3. As described above with reference to figure 1, comparator 4 changes its output state when a voltage at its input crosses a predetermined first threshold, in particular when this input voltage has a positive time derivative (i.e. it is increasing). The first threshold is settled as low as possible in order to detect every pulse and to avoid that the noise makes the comparator output change. In this embodiment, the input terminal of the comparator 4 is connected to the output terminal of filter 7, whose output is used as a reference signal for controlling the switching module 5.

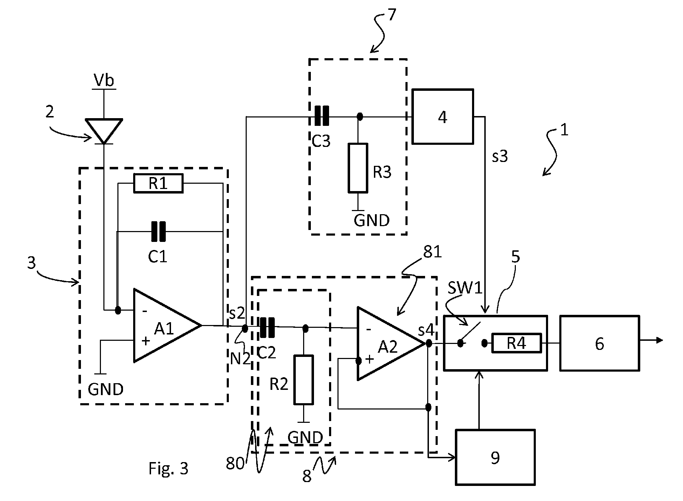

In the embodiment of figure 3, measuring system 1 further comprises an AC coupling module 8 connecting charge amplifier circuit 3 and switching module 5.

Coupling module 8 comprises an high pass filter 80 (resistor R2 and capacitor C2) and a voltage follower 81.

High pass filter 80 is connected to the output of charge amplifier circuit 3 for cutting low frequency components of voltage signal s2 output by charge amplifier circuit 3. High pass filter 80 comprises a capacitor C2 which is connected between the input and the output terminals of filter 80, and a resistor R2 which is connected between the output terminal of filter 80 and a fixed voltage, in particular a common ground GND.

Follower 81 comprises an operational amplifier A2 (in particular a voltage mode operational amplifier) whose output is connected to the non inverting input terminal. Follower 81 is connected between the output of high pass filter 80 and the output of coupling mode 8, which is connected to the switch 5. Follower 81 is used as a decoupling and driving stage.

AC coupling mode 8 receives the signal output by charge amplifier 3 and filters it to eliminate or at least attenuate the frequency components below a first cut-off frequency depending on the values of resistor R2 and capacitor C2. As a consequence, the output of the coupling mode 8 is a signal that does not include any relevant DC component. Experimental results demonstrate that for a pulse rate up to 1 kHz, the best measurements are obtained with a first cut-off frequency comprised between 100 Hz and 700Hz, in particular between 300 Hz and 500Hz.

As for the embodiments of figures 1 and 2, in one embodiment switch SW1 of the switching module 5 is controlled by a timing circuit that opens switch SW1 after a predetermined time interval T.

In another embodiment, shown in figure 3, switch SW1 is controlled by comparator 9 which is connected to the output of AC coupling module 8. Comparator 9 detects the time instant when output of coupling module 8 crosses a predetermined threshold, preferably comparator 9 opens switch SW1 when the monitored signal (in this case the output of module 8) crosses a predetermined threshold and has a negative time derivative (i.e. it is decreasing). In a preferred embodiment, comparator 9 comprises a zero crossing detector detecting when the output of module 8 is zero. In this embodiment, comparator 9 further comprises a logic circuit receiving both the output of zero crossing detector and of comparator 4, so as to open the switch SW1 only after comparator 4 has provided a signal for closing switch SW1.

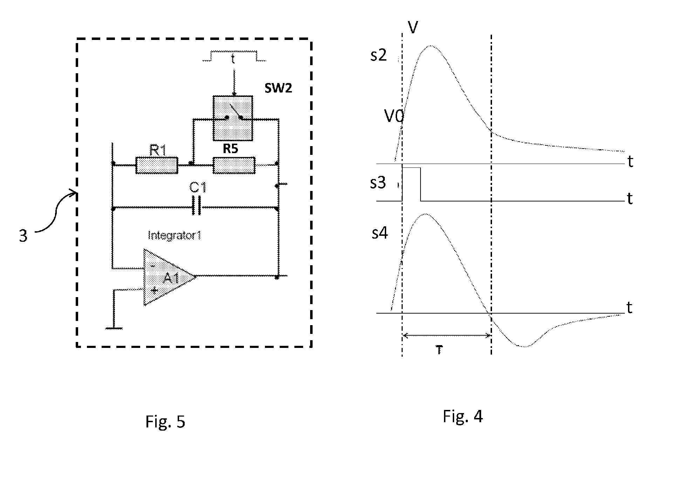

Figure 4 shows certain time signals of figure 3 allowing appreciating the operation of this measuring system.

The voltage output s2 of charge amplifier 3 increases in time as the radiation hits detector 2. When the amplitude of s2 is greater than a threshold V0 (suitable for not confusing noise and valuable signal), comparator 4 generates a trigger pulse s3 that closes switch SW1, therefore starting the measuring time interval.

Voltage signal s2 is filtered by high pass filter 80 and presented as signal s4 at the output of Ac coupling module 8 by follower 81.

As it can be seen from figure 4, s4 increases in time until it reaches its maximum value and then decreases and becomes negative.

Comparator 9 senses s4 and detect the zero crossing of s4, therefore triggering the opening of SW1 and stopping the measuring time interval.

Figure 5 shows another possible embodiment of the charge amplifier circuit 3.

In addition to the elements of figure 1, a parallel of a resistor R5 and a switch SW2 is connected between a terminal of a resistor R1 and the output terminal of operational amplifier A1.

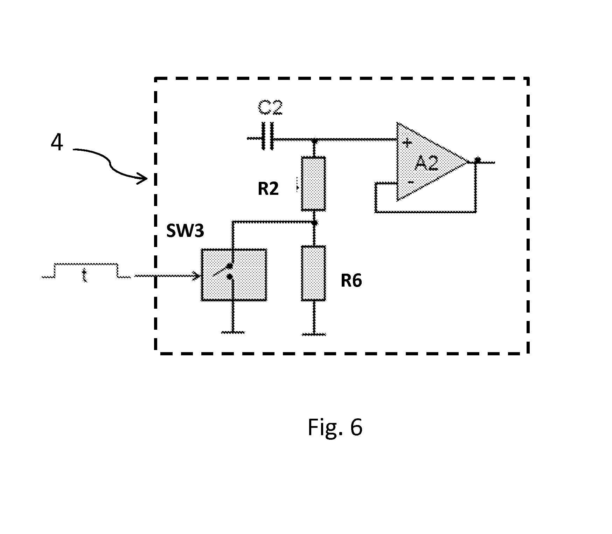

Figure 6 shows an alternative embodiment of AC coupling module 8 of figure 3.

A parallel of a resistor R6 and a switch SW3 is connected between a terminal of resistor R4 and a fixed voltage. The other terminal of the resistor R4 is connected to a terminal of the capacitor C2 and to a positive input terminal of an operational amplifier A2 in voltage follower configuration.

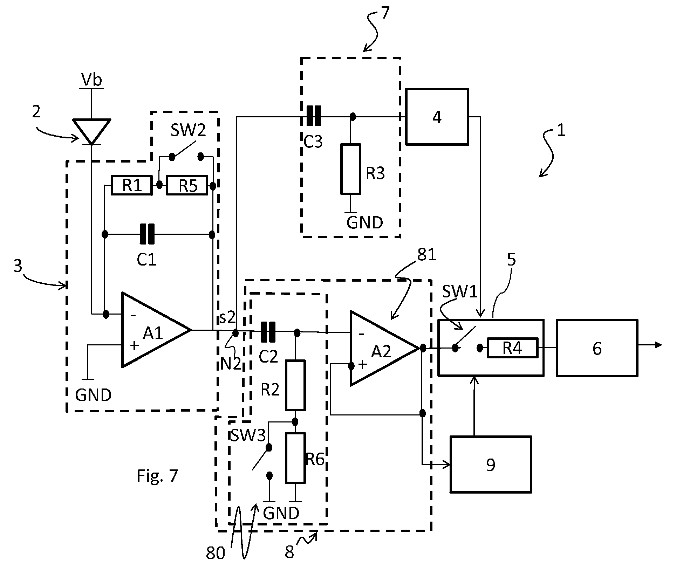

The circuits of figures 5 and 6 can be used alone in combination with the other circuits of figures 1 to 3, or can be used together in a measuring system as provided in figure 7.

In the embodiment of figure 7, switches SW2 and SW3 are driven in opposite phase to the switch SW1, that is the switches SW2 and SW3 are closed when the switch SW1 is open and they are open when the switch SW1 is closed. In a preferred embodiment the signal driving SW2 and SW3 is generated by means of the driving signal of SW1 and a logic inverter circuit.

Closing of switches SW2 and SW3 causes a faster discharging of capacitors C1 and C2 and therefore a faster reset of the respective circuits. Reset means that the outputs of the circuits 3 and 8 are forced to be equal to predetermined values, in particular the output of circuit 3 is forced to a biasing value, while output of circuit 8 is forced to ground.

After reset, circuits 3 and 8 are ready to elaborate another pulse without superposition with the previous ones. By means of these improvements the system 1 may read pulse trains with higher rate.

In the preferred embodiments, the devices of figures 1-7 are reported in the following table 1.

**Table 1**

| Device | Value or product code |
|---|---|
| R1 (fig. 1-3) | 120 kΩ |
| R1 (fig. 5-7) | 39 kΩ |
| R2 (fig. 1-3) | 160 kΩ |
| R2 (fig. 6-7) | 39 kΩ |
| R3 | 15 kΩ |
| R4 | 4.7 kΩ |
| R5 | 82 kΩ |
| R6 | 120 kΩ |
| C1 | 2.7 nF |
| C2 | 2.7 nF |
| C3 | 2.2 nF |
| A1 | AD8626 |
| A2 | AD8626 |
| SW1 | TS5A4594 |
| SW2 | FSA66 |
| SW3 | FSA66 |

The previous table 1 represents only non-limitative examples and other values or device types are possible based on specific application requirements.

The above disclosure shows that the invention fulfils the intended objects and, particularly, overcomes some drawbacks of the prior art.

The method and the system described have very good noise performances.

The method and the measuring system described above allow a measuring of a radiation dose in equipment for radiotherapy, in particular for IORT, with stable performances and less frequent and cheaper maintenance.

The system and the method according to the invention are susceptible of a number of changes and variants, within the inventive concept as defined by the annexed claims. All the details can be replaced by other technically equivalent parts without departing from the scope of the present invention.

As an example, modules described in connections with figures 1 to 7 can be connected, integrated or put in communication in many different ways while executing the same functions of integrating, filtering, etc....

While the system and the method have been described with particular reference to the accompanying figures, the numerals referred to in the disclosure and claims are only used for the sake of a better intelligibility of the invention and shall not be intended to limit the claimed scope in any manner.

It is also clear that the present invention is not limited to system and methods for measuring radiation doses, but is also directed to a medical treatment and to a relative medical equipment.

In particular, the invention relates to a medical treatment wherein a patient is exposed to ionizing radiation for curing tumours, and in particular for killing malignant tumour cells.

According to the invention, ionizing radiation is generated by means of a radiation source, like an hot cathode, accelerated by an accelerator (e.g. a LINAC) and sent on a region of the patient (e.g. a human being) to be treated, in particular radiation is sent on an exposed tumour or on an exposed tumour bed, like in IORT.

According to the invention a detector is placed near the patient region exposed to radiation; radiation is measured by means of one of the methods and systems described with reference to figures 1-7, and treatment is ended when the measured radiation reaches a predetermined radiation dose to be given to the patient.

In order to implement the above treatment in a safe way, the patient is placed on a bed under the arm of a medical equipment generating and sending the ionizing radiation on the patient as said before. According to the invention, this medical equipment is provided with a control unit controlling the radiation source and other component of the machine, in particular the accelerator. Control unit is connected to the measuring system and therefore stops generation and transmission of ionizing radiation as soon as the requested dose has been given to the patient. Preferably the detector is connected via a long cable to the control unit which comprises the readout circuit above described.

## Claims

1. Method for measuring a radiation dose in a radiotherapy treatment, wherein
a radiation is detected by means of a detector (2) which outputs a current signal (s1) dependent on the detected radiation, and
wherein
radiation dose is estimated by considering the current signal (s1) during at least one measuring time interval, starting of said at least one measuring time interval being obtained by comparing a threshold with the amplitude of a reference signal generated from the current signal.

2. Method according to claim 1, wherein the reference signal is obtained by integrating the current signal (s1) output by the detector (2).

3. Method according to claim 1, wherein the reference signal is obtained by high pass filtering an integral signal (s2) generated by integrating the current signal (s1) output by the detector (2), so as to eliminate or attenuate frequencies below a first cut-off frequency.

4. Method according to claim 3, wherein said first cut-off frequency is comprised between 100 Hz and 700 Hz, preferably between 300 Hz and 500 Hz.

5. Method according to any of the previous claims, wherein said dose is estimated by integrating the current signal (s1) from the detector, so as to generate an integral signal (s2),
high-pass filtering the integral signal (s2) so as to eliminate or at least attenuate frequency components below a second cut-off frequency, said second cut-off frequency being different from zero,
at each of said at least one measuring time intervals summing the filtered integral signal (s4) with the filtered integral signals measured at previous measuring time intervals.

6. Method according to claims 5 when depending on claim 3 or 4, wherein said second cut-off frequency is lower than said first cut-off frequency.

7. Method according to any of claims 1 to 6, wherein radiation dose is estimated by
integrating the current signal (s1) from the detector, so as to generate an integral signal (s2),
at each of said at least one measuring time intervals, summing the integral signal (s4) with the integral signals measured at previous measuring time intervals.

8. Method according to claim 7, wherein measuring time intervals are ended when the amplitude of the filtered integral signal (s4) equals a predetermined value, in particular when it is zero.

9. Method according to claim 7 or 8, wherein said at least one time interval ends when the filtered integral signal (s4) crosses a second predetermined threshold value with a negative time derivative.

10. Method according to any of claims 1 to 9,
wherein said radiation dose is provided with as a train of radiation pulses, wherein each radiation pulse of said train of radiation pulses is associated to one of said at least one time intervals,
wherein said one time interval lasts for a predetermined time, said predetermined time being longer than the expected length of each radiation pulse and less than half the radiation pulses repetition rate, and
wherein radiation dose is estimated by summing contribution of the current signal (s1) during a plurality of time intervals associated to said radiation pulses.

11. Method for measuring a radiation dose in radiotherapy treatments, said method comprising the following steps:
- detecting a radiation
- generating a first electric signal (s1) dependent on said detected radiation;
- integrating said first electrical signal so as to generate a second electric signal (s2);
- eliminating the frequency components of said second electric signal below a first cut-off frequency, so as to generate a third electric signal (s4);
- eliminating the frequency components of said second electric signal below a second cut-off frequency, generating a fourth electric signal;
- applying to said third electrical signal (s4) a gain different from zero for the duration of a time interval, generating a fifth electric signal, wherein said time interval starts when said fourth electrical signal crosses a first predetermined threshold value, wherein said fifth electric signal is related to the measure of said dose.

12. System for measuring a radiation dose radiotherapy treatments, said system comprising:
- one detector (2) suitable to generate a current signal (s1) proportional to the detected radiation;
- a readout circuit for implementing the method according to any of claims 1 to 11.

13. System according to claim 12, wherein said readout circuit comprises
- a charge amplifier circuit (3) connected to said detector (2) for integrating the current signal (s1) output by said detector (2);
- a first high-pass filter (80) connected to the output of said first integrator circuit (3), said first high-pass filter (80) having a first cut-off frequency;
- a second high-pass filter (7) connected to the output of said first integrator circuit (3), said second high-pass filter having a second cut-off frequency;
- a switch (SW1) connected to the output of said first high pass filter (80);
- a first comparator (4) connected to the output of said second high-pass filter (7), said first comparator (4) being adapted to control closing of said switch (SW1) when the output of said second high-pass filter (80) has an amplitude greater than a predetermined threshold.

14. System according to claim 13, comprising an integrator circuit (6) connected to said switch (SW1) so as to integrate the output of said first high-pass filter (80) when said switch (SW1) is closed, said second integrator circuit (6) being preferably connected to said switch (SW1) by means of a resistor (R4).

15. System according to claim 13 or 14, further comprising a second comparator (9) connected to the output of said first high-pass filter (80), said second comparator (9) adapted to control the opening of said switch (SW1) when the signal output by said first high-pass filter (s4) equals a predetermined value, in particular when it is zero.

16. System according to claim 13 or 14, further comprising a second comparator (9) connected to the output of said first high-pass filter (80), said second comparator (9) adapted to control the opening of said switch (SW1) when the signal output by said first high-pass filter (s4) equals a predetermined value, in particular when it is zero, with a negative time derivative.

17. System according to claim 13 or 14, further comprising a timer circuit connected to said first comparator (4), said timer circuit being adapted to control the opening of said switch (SW1) after a predetermined amount of time after closing of said switch (SW1).

18. Equipment for radiotherapy comprising:
- a source of ionizing radiation for generating ionizing radiation,
- an accelerator for accelerating said ionizing radiation and transmitting said radiation;
- a control unit for controlling said source of ionizing radiation;
- a system for measuring the transmitted ionizing radiation,
wherein said system for measuring said transmitted radiation is a system according to any of claims 12 to 17.

19. Medical treatment comprising the steps of:
- exposing a patient to ionizing radiation for treating tumours, and in particular for killing malignant tumour cells,
- measuring the ionizing radiation by means of a method according to any of claims 1 to 11,
- ending said medical treatment when the measured radiation reaches a predetermined radiation dose.
